# EUROPÄISCHE PATENTSCHRIFT

(11) **EP 2 700 207 B1**
(45) Veröffentlichungstag und Bekanntmachung des Hinweises auf die Patenterteilung: **20.09.2017**
(21) Anmeldenummer: 12708817.7
(22) Anmeldetag: 07.03.2012
(51) Int. Cl.: H04L 25/02, H04B 17/00

(54) **ADAPTIVE KANALSCHÄTZUNG FÜR DRAHTLOSE KOMMIKATION ZWISCHEN EINEM FAHRZEUG UND ANDEREN KOMMUNIKATIONSTEILNEHMERN UNTER VERWENDUNG DER MESSERGEBNISSE DER UMFELDSENSORIK**
ADAPTIVE CHANNEL ESTIMATION FOR WIRELESS COMMUNICATION BETWEEN VEHICLES AND OTHER USERS USING THE MEASUREMENT DATA OF AMBIENT SENSORS
ESTIMATION ADAPTIVE DU CANAL DE TRANSMISSION SANS FIL ENTRE UN VÉHICULE ET DES AUTRES UTILISATEURS EN UTILISANT LES RÉSULTATS DE MESURE DES SENSEURS D'ENTOURAGE

(30) Priorität: 18.04.2011 DE 102011017474
(43) Veröffentlichungstag der Anmeldung: 26.02.2014
(73) Patentinhaber: Continental Automotive GmbH, 30165 Hannover (DE)
(72) Erfinder: MENZEL, Marc, 35096 Weimar (Lahn) (DE); STÄHLIN, Ulrich, 65760 Eschborn (DE)
(86) Internationale Anmeldenummer: PCT/EP2012/053920
(87) Internationale Veröffentlichungsnummer: WO 2012/143170

(56) Entgegenhaltungen:
- EP-A1- 0 878 921
- US-A1- 2010 215 081
- JOHAN KAREDAL ET AL: "A geometry-based stochastic MIMO model for vehicle-to-vehicle communications", IEEE TRANSACTIONS ON WIRELESS COMMUNICATIONS, Bd. 7, Nr. 7, 1. Juli 2009 (2009-07-01), Seiten 3646-3657, XP011264139, NJ, US ISSN: 1536-1276
- MOLISCH A ET AL: "A survey on vehicle-to-vehicle propagation channels", IEEE WIRELESS COMMUNICATIONS, Bd. 16, Nr. 6, 1. Dezember 2009 (2009-12-01), Seiten 12-22, XP011286587, NJ, US ISSN: 1536-1284, DOI: 10.1109/MWC.2009.5361174
- RABINDRANATH BERA ET AL: "Modeling and Implementation Of Wireless Embedded System For Intelligent Transport System Application", IEEE REGION 10 AND THE THIRD INTERNATIONAL CONFERENCE ON INDUSTRIAL AND INFORMATION SYSTEMS - ICIIS 2008, 8. Dezember 2008 (2008-12-08), Seiten 1-6, XP031435520, NJ, USA ISBN: 978-1-4244-2806-9
- LINDENMEIER S ET AL: "A wireless data link for mobile applications", IEEE MICROWAVE AND WIRELESS COMPONENTS LETTERS, Bd. 13, Nr. 8, 1. August 2003 (2003-08-01) , Seiten 326-328, XP011427829, NY, US ISSN: 1531-1309, DOI: 10.1109/LMWC.2003.815706

## Beschreibung

Die Erfindung betrifft ein Verfahren zur Kanalschätzung für die Drahtloskommunikation zwischen einem Kraftfahrzeug und einem anderen Kommunikationsteilnehmer, welcher ein mobiler oder stationärer Kommunikationsteilnehmer sein kann. Bei der Kanalschätzung wird das Ergebnis einer Umfeldsensorik mit verwendet.

In einem digitalen Übertragungssystem werden die zu übertragenden Daten zunächst digital moduliert. Dies wird auch Symbolmapping genannt. In einem Pulsformfilter wird anschließend ein zeitkontinuierliches Basisbandsignal erzeugt. Bevor das Signal über den eigentlichen Übertragungskanal übertragen werden kann, wird das Basisbandsignal in ein sogenanntes Bandpasssignal transformiert, beispielsweise mittels eines Quadraturmodulators.

Empfängerseitig wird das Empfangssignal über einen entsprechenden Quadraturdemodulator in ein Basisbandsignal zurück transformiert, wobei sich nach dieser Rücktransformation bestimmte Entstörungsmechanismen anschließen können.

Der Übertragungskanal wird durch die physikalischen Kommunikationseigenschaften des Systems bestimmt. Dabei kann das Sendesignal durch eine geeignete Wahl von Übertragungs- und Modulationsverfahren an die Eigenschaften des Übertragungskanals angepasst werden, um eine möglichst optimale Übertragung zu erreichen. Auf Seiten des Empfängers wird eine sogenannte Kanalschätzung durchgeführt, um auftretende Verzerrungen durch den Übertragungskanal ausgleichen zu können. Hierzu werden häufig bei dem Sender Referenzsignale in den Datenstrom eingefügt, aus denen der Empfänger Informationen über die Kanalübertragungsfunktion ableiten kann. Ausgehend von diesen Informationen kann die Kanalübertragungsfunktion geschätzt werden.

Die bekannten Kanalschätzverfahren erzeugen dabei ein Modell der Umgebung, wobei bisher üblicherweise nur Informationen aus der Kommunikation selbst verwendet werden. Dies ist jedoch für eine Drahtloskommunikation mit der Außenwelt problematisch, wenn ein Kommunikationsteilnehmer, beispielsweise ein Kraftfahrzeug, sich mit hoher Geschwindigkeit bewegt und sich die Umgebungsbedingungen dadurch schnell ändern. Dies führt auch zu sich schnell ändernden Ausbreitungseigenschaften der Drahtlos- bzw. Funkkommunikation.

Als Drahtloskommunikationssysteme mit der Außenwelt sind in einem Kraftfahrzeug eine Vielzahl von Möglichkeiten bekannt. Die Systeme können mittels einer Fahrzeug-zu-Infrastruktur- oder Fahrzeug-zu-Fahrzeug-Kommunikation (C2X) die Fahrzeugsicherheit erhöhen, die Mobilität verbessern und für kommerzielle Anwendungen genutzt werden. Angedachte Kommunikationstechniken sind hier vor allem zellulare Kommunikationssysteme, wie GPRS, EDGE, UMTS, LTE, WiMax, automotive-WLAN nach dem IEEE 802.11p-Standard oder der Schlüsselfunk (RKE - Remote Keyless Entry). Über diese Techniken lassen sich auch ein Internetzugang oder eine drahtlose Fahrberechtigung umsetzen.

Aus der US 6,349,119 B1 ist bereits ein Verfahren zur Kanalschätzung bekannt, welches die Eigenschaften des Kanals zwischen einem Sender und einem Empfänger mit hoher Genauigkeit durch geometrische Modelle des Kanals abschätzt, die Position der Sendeantennen durch Verwendung der geometrischen Informationen, die auf dem Modell basieren, erkennt und den Pfad zwischen dem Sender und dem Empfänger abschätzt. Die geometrischen Informationen werden bei einem Fahrzeug durch eine Kamera erfasst.

Allerdings besteht hierbei das Problem, dass die Sendeantennen durch die Kameras häufig nur schwer zu erkennen sind und eine aufwendige Bildverarbeitung durchgeführt werden muss, um die Positionen der Kameras aus den aufgenommenen Bilddaten tatsächlich zu ermitteln. Das Verfahren ist daher sehr aufwendig und rechenintensiv und wird gerade bei hohen Fahrzeuggeschwindigkeiten häufig nicht zu befriedigenden Ergebnissen führen, weil die Auswertung der Antennenposition zu lange dauert und die Relativposition zwischen Sender und Empfänger bis zur Ermittlung der Senderposition schon wieder verändert ist. Ein weiteres Verfahren ist aus dem folgenden Fachartikel bekannt: JOHAN KAREDAL ET AL: "A geometry-based stochastic MIMO model for vehicle-to-vehicle communications", IEEE TRANSACTIONS ON WIRELESS COMMUNICATIONS, Bd. 7, Nr. 7, 1. Juli 2009 (2009-07-01), Seiten 3646-3657, NJ, US. Aufgabe der vorliegenden Erfindung ist es daher, ein Verfahren zur Kanalschätzung vorzuschlagen, bei dem die Einbeziehung von Umweltsensorik für die Kanalschätzung vereinfacht wird.

Diese Aufgabe wird erfindungsgemäß durch ein Verfahren mit den Merkmalen des Anspruchs 1 gelöst. Dabei ist vorgesehen, dass mittels der Umfeldsensorik zunächst das Ausbreitungsverhalten der Drahtloskommunikation in der Nähe des Kraftfahrzeugs erkannt und klassifiziert wird, wobei aufgrund der Klassifizierung des Ausbreitungsverhaltens die Kanalschätzung angepasst wird.

Erfindungsgemäß ist es hierfür also ausreichend, mittels der Umfeldsensorik typische Umgebungsbedingungen des Empfängers in dem Kraftfahrzeug zu erfassen, aus denen Rückschlüsse auf den Übertragungskanal und mögliche Störungen in dem Übertragungskanal gezogen werden können. Diese Informationen werden durch eine Klassifizierung vereinheitlicht, welche dann eine geeignete Anpassung der Kanalschätzung ermöglicht. Im Vergleich zu der in der US 6,349,119 B1 beschriebenen Ausführung, wonach durch eine Kamera-Umfeldsensorik eine detaillierte Auswertung der Umgebung vorgenommen werden muss, ist es erfindungsgemäß also ausreichend, geeignete Umgebungsmerkmale zu erfassen, die für die Ausbreitung der Drahtloskommunikation relevant sind, und diese erfassten Merkmale dann bei der Kanalschätzung mit zu verwenden. Hierdurch wird ein einfaches und auch bei hohen Geschwindigkeiten schnell wirkendes System zur Verbesserung der Kanalschätzung geschaffen, mit dem trotz der mittels der Klassifizierung pauschalisierten Umgebungsmerkmale eine erhebliche Verbesserung der Übertragungsqualität in der Drahtloskommunikation erreicht werden kann.

Gemäß einer bevorzugten Ausführungsform ist vorgesehen, dass für die Klassifizierung des Ausbreitungsverhaltens eine Klasse aus einer Mehrzahl vorgegebener Klassifizierungen ausgewählt wird. Einer solchen Klasse aus der Klassifizierung sind vorzugsweise bestimmte typische Übertragungsmuster zugeordnet. Zu den vorgegebenen Klassifizierungen können also insbesondere Klassen zählen wie: Stadt, Landstraße, Autobahn, Häuserschlucht, hügelige Umgebung, freie Fläche, Tunnel oder dergleichen.

Erfindungsgemäß kann bei einer Änderung der Klassifizierung die Kanalschätzung erneut durchgeführt bzw. neu gestartet werden, beispielsweise durch einen Reset der Kanalschätzung und eine Neuermittlung der benötigten Daten. Gemäß einer bevorzugten Weiterentwicklung kann die erneute Durchführung einer Kanalschätzung auf bestimmte Übergänge in der Klassifizierung beschränkt werden, das heißt bei einem Wechsel zwischen verschiedenen Klassen der Klassifizierung, die typischerweise mit signifikanten Änderungen des Übertragungsverhaltens in dem Übertragungskanal einhergehen. Ein Beispiel ist hierfür ist das Einfahren aus einer freien Landschaft in eine Stadt mit hohen Häuserfronten, an welchen die Übertragungssignale reflektiert und abgelenkt werden.

Es ist erfindungsgemäß möglich, das Anpassen der Kanalschätzung dadurch zu erreichen, dass auf der Grundlage der Klassifizierung des Ausbreitungsverhaltens ein Modell für die Kanalschätzung ausgewählt wird, wobei verschiedene Modelle für verschiedene Klassifizierungen aufgrund der physikalischen Gegebenheiten unterschiedlich geeignet sind.

Ergänzend oder alternativ kann eine Anpassung der Kanalschätzung auf der Grundlage der Klassifizierung des Ausbreitungsverhaltens und/oder weiteren Informationen der Umfeldsensorik durch Anpassung von Parametern in der Kanalschätzung erreicht werden. Hierdurch kann innerhalb eines Modells die Qualität der Kanalschätzung durch Anpassung von Parametern an die tatsächlichen Umgebungsmerkmale des Kraftfahrzeugs erreicht werden.

Als Parameter kommen erfindungsgemäß ein Vergessensfaktor, eine Reflexionsstärke, die Fahrzeuggeschwindigkeit, die Dämpfung, die Abschattung und/oder andere Eigenschaften der Umgebung und/oder der Kommunikation in Frage. Der Vergessensfaktor gibt an, wie schnell die Vergangenheit bei einer Änderung der Umgebung vergessen wird. So wird die Vergangenheit üblicherweise schnell vergessen, wenn sich die Umgebung schnell ändert, und langsam vergessen, wenn sich keine großen Änderungen ergeben. Ein Maß hierfür kann auch die Fahrzeuggeschwindigkeit sein. Durch die Reflexionsstärke wird angegeben, wie stark die Funksignale beispielsweise an Häuserfronten innerhalb einer Stadt reflektieren, um Störungen aufgrund der Reflexionen besser erfassen zu können. Eine geeignete Umfeldsensorik können für die Geschwindigkeit des Fahrzeugs ein Bewegungsmesser oder Tachometer, für Änderungen von Landschaftseigenschaften insbesondere eine Kamera und entsprechende Bilderkennungsmethode sowie für das Messen des Reflexionsverhaltens der Umgebung Radar, Lider und/oder Lasersensoren sein. Bei der Messung des Reflexionsverhaltens können die vorbeschriebenen Sensoren Signale ausstrahlen und die Geschwindigkeit und Intensität einer Reflexion messen, um das Gesamtreflexionsverhalten in der Nähe des Kraftfahrzeugs abzuschätzen und bei der Anpassung der Kanalschätzung zu berücksichtigen.

Die Dämpfung beschreibt, wie stark die Funksignale durch die Umgebung abgeschwächt werden. Diese Information kann vor allem aus Kamera (für z. B. Nebel, Wald, etc.) und/oder Radarsensoren (über deren Reichweite) ermittelt werden. Ähnlich verhält es sich mit der Abschattung, wobei diese zu einer abrupten Verkürzung der Reichweite der Kommunikation führt. Im übertragenen Sinn handelt es sich hierbei um eine lokale, abrupte starke Dämpfung.

Vorzugsweise wird durch die Umfeldsensorik das in Bewegungsrichtung des Kraftfahrzeugs vor dem Fahrzeug liegende Umfeld erfasst, weil dieses für die zukünftige Empfangsqualität entscheidend ist. Durch das Verfahren zur Beeinflussung der Kanalschätzung wird dann also das erfasste Umfeld bezüglich des Ausbreitungsverhaltens in einem Bereich klassifiziert, durch welchen sich das Fahrzeug in Kürze bewegen wird. Je nach Situation können aber auch andere Bereiche um das Fahrzeug erfasst werden, beispielsweise der rückwärtige Bereich, falls sich das Fahrzeug rückwärts bewegt oder die Spur wechseln will, oder der seitliche Bereich, falls das Fahrzeug abbiegen will oder von der Seite Gefahr droht.

Eine erfindungsgemäß besonders bevorzugte Verwendung des vorbeschriebenen Verfahrens bietet sich bei einer als Kurzreichweitenfunk ausgebildeten Drahtloskommunikation an, insbesondere einem automotiv-WLAN nach dem IEEE 802.11/p-Standard.

Gemäß einer bevorzugten Ausgestaltung kann das erfindungsgemäße Verfahren zur Kanalabschätzung in einer Recheneinheit einer Kommunikations-Funktionseinheit des Kraftfahrzeugs durchgeführt werden, vorzugsweise der Funktionseinheit eines Kraftfahrzeugs für die mobile Kommunikation.

Entsprechend bezieht sich die vorliegende Erfindung auch auf Funktionseinheit eines Kraftfahrzeugs mit einer Sende- und Empfangseinrichtung für die Drahtloskommunikation, einem Anschluss an ein Fahrzeug-Kommunikationsnetz zum Empfang von Informationen einer Umfeldsensorik des Kraftfahrzeugs und einer Recheneinheit, wobei die Recheneinheit erfindungsgemäß zur Durchführung des vorbeschriebenen Verfahrens oder Teilen hiervon eingerichtet ist.

Die Einrichtung der Funktionseinheit bzw. einer beliebigen Recheneinheit kann auch durch ein erfindungsgemäßes Computerprogrammprodukt zur Durchführung einer Kanalschätzung bei einer Drahtloskommunikation zwischen einem Kraftfahrzeug und einem anderen Kommunikationsteilnehmer mit Programmcodemitteln zur Ausführung eines Computerprogramms nach dessen Implementierung in einer Recheneinheit erfolgen, wobei die Programmmittel dazu vorgesehen sind, nach der Implementierung in der Recheneinheit das vorbeschriebene Verfahren oder Teile hiervon auszuführen.

Weitere Vorteile, Merkmale und Anwendungsmöglichkeiten der vorliegenden Erfindung ergeben sich auch aus der nachfolgenden Beschreibung eines Ausführungsbeispiels und der Zeichnung. Dabei bilden alle beschriebenen und/oder bildlich dargestellten Merkmale für sich oder in beliebiger Kombination den Gegenstand der vorliegenden Erfindung, auch unabhängig von ihrer Zusammenfassung in den Ansprüchen oder deren Rückbezügen.

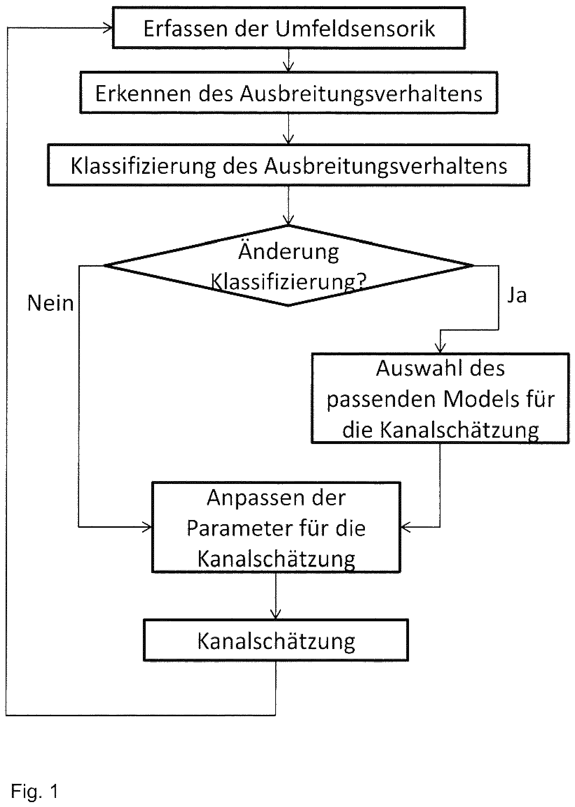

Die einzige Fig. 1 zeigt ein Flussdiagramm des erfindungsgemäßen Verfahrens, welches auch in der Recheneinheit einer Funktionseinheit des Kraftfahrzeugs implementiert sein kann oder durch Programmcodemittel eines Computerprogrammprodukts in einer Recheneinheit implementierbar ist.

Im Rahmen der üblichen Kanalschätzung bei der Drahtloskommunikation zwischen einem Kraftfahrzeug und einem anderen Kommunikationsteilnehmer, welcher ein stationärer oder auch ein mobiler Kommunikationsteilnehmer sein kann, wird zunächst mit dem Erfassen der Umfeldsensorik begonnen. Hierzu werden Signale der Umfeldsensorik des Kraftfahrzeugs ausgewertet. Die Umfeldsensorik kann einfacherweise eine beispielsweise in Fahrtrichtung des Kraftfahrzeugs gerichtete Kamera sein, mit der die Umgebung des Fahrzeugs aufgenommen und mittels Bilderkennung soweit erkannt wird, dass bestimmte Umgebungen klassifizierbar sind. Dies bedeutet beispielsweise, dass die Bildverarbeitung schnell erkennt, ob sich das Fahrzeug in einer freien Umgebung, in einer durch Pflanzen begrenzten Umgebung (Wald, Büsche oder dergleichen) oder in einer bebauten Umgebung befindet, wobei in einer bebauten Umgebung auch die Höhe der Bebauung noch ohne großen Aufwand abgeschätzt bzw. bewertet werden kann. Ferner können Radar-, Lidar- oder Lasersensoren verwendet werden, die Strahlung von dem Fahrzeug initiieren und die reflektierte Strahlung erfassen, um die Ausbreitung elektromagnetischer Wellen in der Umgebung des Fahrzeugs zu testen.

Aus den mit der Umfeldsensorik erfassten Informationen kann dann das Ausbreitungsverhalten der Drahtloskommunikation, das heißt der im Rahmen der Drahtloskommunikation ausgetauschten elektromagnetischen Wellen, in der Nähe des Kraftfahrzeugs beurteilt werden. An das Erkennen bzw. Beurteilen des Ausbreitungsverhaltens schließt sich ein klassifizieren des Ausbreitungsverhaltens an, wobei durch die verschiedenen Klassen der Klassifizierung bestimmten mit der Umfeldsensorik erkannten Merkmalen verschiedene Eigenschaften in der Ausbreitung der elektromagnetischen Wellen der Drahtloskommunikation zugeordnet werden.

Optional, im Rahmen einer bevorzugten Ausführung der Erfindung jedoch sinnvoll, kann überprüft werden, ob sich seit der letzten Klassifizierung des Ausbreitungsverhaltens die Klassifizierung geändert hat. Wenn dies der Fall ist, kann es, auch abhängig von dem Übergang aus einer bestimmten ersten in eine bestimmte zweite Klasse, sinnvoll sein, die gesamte Kanalschätzung zurückzusetzen, um die Kanalschätzung an die geänderten Umgebungsbedingungen anzupassen.

Sofern eine Änderung der Klassifizierung stattgefunden hat, wird ein neues, zur geänderten Klassifizierung passendes Modell für die Kanalschätzung ausgewählt, wobei das Modell von der Klassifizierung abhängt. Andernfalls wird das gleiche Modell weiterverwendet.

Anschließend können in Abhängigkeit der Klassifizierung und/oder weiterer Informationen aus der Umfeldsensorik Parameter für die Kanalschätzung angepasst werden. Dabei können auch Objekte mit Mehrwegausbreitung erkannt und in den Modellparametern der Kanalschätzung berücksichtigt werden.

Nachdem sowohl das Modell als auch ggf. die Parameter für die Kanalschätzung ausgewählt sind, wird die Kanalschätzung durchgeführt, die eine Optimierung des Empfangs in der Drahtloskommunikation bedeutet. Nach Durchführung der Kanalschätzung wird das Erfassen der Umweltsensorik wieder gestartet, um eventuelle Änderungen in der Umgebung des Fahrzeugs festzustellen.

Hierbei kann erfindungsgemäß eine vordefinierte Pause zwischen der Durchführung der letzten Kanalschätzung und dem Neustarten des Prozesses durch Erfassen der Umweltsensorik gemacht werden.

Die vorbeschriebene Kanalschätzung ist insbesondere bei einem Kurzreichweitenfunk, wie automotive-WLAN nach dem IEEE 802.11/p-Standard sinnvoll, um Verbesserungen der Empfangsleistung zu erzielen. Ist die Reichweite der Drahtloskommunikation dagegen deutlich größer als die Reichweite der Umfeldsensoren, ist von keiner großen Verbesserung auszugehen.

Die Erfindung beruht insbesondere darauf, das Ausbreitungsverhalten der Drahtloskommunikation in der Umgebung des Kraftfahrzeugs zu erkennen und auf einfache Weise zu klassifizieren, um aufbauend auf dieser Klassifizierung die Kanalschätzung bzw. den Empfang zu verbessern.

## Patentansprüche

1. Verfahren zur Kanalschätzung für die Drahtloskommunikation zwischen einem Kraftfahrzeug und einem anderen Kommunikationsteilnehmer, wobei das Ergebnis einer Umfeldsensorik bei der Kanalschätzung mit verwendet wird und mittels der Umfeldsensorik das Ausbreitungsverhalten der Drahtloskommunikation in der Nähe des Kraftfahrzeugs erkannt und klassifiziert wird, wobei aufgrund der Klassifizierung des Ausbreitungsverhaltens die Kanalschätzung angepasst wird, **dadurch gekennzeichnet, dass** die An- passung der Kanalschätzung auf der Grundlage der Klassifizierung des Ausbreitungsverhaltens und weiteren Informationen der Umfeldsensorik durch Anpassung von Parametern in der Kanalschätzung erfolgt und innerhalb eines Modells die Qualität der Kanalschätzung durch Anpassung von besagten Parametern an die tatsächlichen Umgebungsmerkmale des Kraftfahrzeugs erreicht wird.

2. Verfahren nach Anspruch 1, **dadurch gekennzeichnet, dass** für die Klassifizierung des Ausbreitungsverhaltens eine Klasse aus einer Mehrzahl vorgegebener Klassifizierungen ausgewählt wird.

3. Verfahren nach Anspruch 1 oder 2, **dadurch gekennzeichnet, dass** bei einer Änderung der Klassifizierung die Kanalschätzung neu gestartet wird.

4. Verfahren nach einem der vorhergehenden Ansprüche, **dadurch gekennzeichnet, dass** auf der Grundlage der Klassifizierung des Ausbreitungsverhaltens ein Modell für die Kanalschätzung ausgewählt.

5. Verfahren nach einem der vorhergehenden Ansprüche, **dadurch gekennzeichnet, dass** auf der Grundlage der Klassifizierung des Ausbreitungsverhaltens und/oder Informationen der Umfeldsensorik Parameter der Kanalschätzung angepasst werden.

6. Verfahren nach Anspruch 5, **dadurch gekennzeichnet, dass** Parameter ein Vergessensfaktor, eine Reflexionsstärke, eine Dämpfung, eine Abschattung und/oder die Fahrzeuggeschwindigkeit sind.

7. Verfahren nach einem der vorhergehenden Ansprüche, **dadurch gekennzeichnet, dass** die Umfeldsensorik mindestens das in Bewegungsrichtung des Kraftfahrzeugs liegende Umfeld erfasst.

8. Verfahren nach einem der vorhergehenden Ansprüche, **dadurch gekennzeichnet, dass** das Verfahren bei einer als Kurzreichweitenfunk ausgebildeten Drahtloskommunikation verwendet wird.

9. Verfahren nach einem der vorhergehenden Ansprüche, **dadurch gekennzeichnet, dass** das Verfahren zur Kanalschätzung in einer Recheneinheit einer Kommunikations-Funktionseinheit des Kraftfahrzeugs durchgeführt wird.

10. Funktionseinheit eines Kraftfahrzeugs mit einer Sende- und Empfangseinrichtung für die Drahtloskommunikation, einem Anschluss an ein Fahrzeug-Kommunikationsnetz zum Empfang von Informationen einer Umfeldsensorik des Kraftfahrzeugs und einer Recheneinheit, **dadurch gekennzeichnet, dass** die Recheneinheit zur Durchführung des Verfahrens nach einem der Ansprüche 1 bis 9 eingerichtet ist.

11. Computerprogrammprodukt zur Durchführung einer Kanalschätzung bei einer Drahtloskommunikation zwischen einem Kraftfahrzeug und einem anderen Kommunikationsteilnehmer mit Programmcodemitteln zur Ausführung eines Computerprogramms nach dessen Implementierung in einer Recheneinheit, **dadurch gekennzeichnet, dass** die Programmmittel dazu vorgesehen sind, nach der Implementierung in der Recheneinheit das Verfahren nach einem der Ansprüche 1 bis 9 auszuführen.

## Claims

1. Method for channel estimation for wireless communication between a motor vehicle and another communication partner, the result of an environment sensor system being used also in the channel estimation and, by means of the environment sensor system, the propagation characteristic of the wireless communication in the vicinity of the motor vehicle being detected and classified, the channel estimation being adapted on the basis of the classification of the propagation characteristic, **characterized in that** adaptation of the channel estimation takes place on the basis of the classification of the propagation characteristic and of further information of the environment sensor system by means of adaptation of parameters in the channel estimation and the quality of the channel estimation within a model is achieved by adaptation of said parameters to the actual environmental features of the motor vehicle.

2. Method according to Claim 1, **characterized in that**, for the classification of the propagation characteristic, one class is selected from a multiplicity of predefined classifications.

3. Method according to Claim 1 or 2, **characterized in that** the channel estimation is restarted in the case of a change of the classification.

4. Method according to one of the preceding claims, **characterized in that** a model is selected for the channel estimation on the basis of the classification of the propagation characteristic.

5. Method according to one of the preceding claims, **characterized in that** parameters of the channel estimation are adapted on the basis of the classification of the propagation characteristic and/or information of the environment sensor system.

6. Method according to Claim 5, **characterized in that** a factor of forgetting, an intensity of reflection, an attenuation, a shading and/or the vehicle speed are parameters.

7. Method according to one of the preceding claims, **characterized in that** the environment sensor system covers at least the environment located in the direction of movement of the motor vehicle.

8. Method according to one of the preceding claims, **characterized in that** the method is used in a wireless communication designed as short range radio.

9. Method according to one of the preceding claims, **characterized in that** the method for channel estimation is performed in a computing unit of a functional communication unit of the motor vehicle.

10. Functional unit of a motor vehicle comprising a transmitting and receiving device for wireless communication, a connection to a vehicle communication network for receiving information of an environment sensor system of the motor vehicle and a computing unit, **characterized in that** the computing unit is configured for performing the method according to one of Claims 1 to 9.

11. Computer program product for performing a channel estimation during a wireless communication between a motor vehicle and another communication partner comprising program code means for executing a computer program after its implementation in a computing unit, **characterized in that** the program means are provided for executing the method according to one of Claims 1 to 9 after the implementation in the computing unit.

## Revendications

1. Procédé destiné à l'évaluation des canaux pour la communication sans fil entre un véhicule à moteur et un autre abonné de communication, lequel le résultat d'un système de détection de l'environnement est activement employé pour l'évaluation des canaux et le comportement de propagation de la communication sans fil, qui se déroule à proximité du véhicule à moteur, est reconnu et soumis à une classification au moyen du système de détection de l'environnement, lequel l'évaluation des canaux est ajustée sur la base de la classification du comportement de propagation,
**caractérisé en ce que** l'ajustement de l'évaluation des canaux est réalisé sur la base de la classification du comportement de propagation, ainsi que sur la base d'autres informations du système de détection de l'environnement par l'ajustement de paramètres dans l'évaluation des canaux et la qualité de l'évaluation des canaux est obtenue au sein d'un modèle par l'ajustement desdits paramètres aux caractéristiques effectives de l'environnement du véhicule à moteur.

2. Procédé selon la revendication 1, **caractérisé en ce qu'**une catégorie issue d'une pluralité de classifications prédéterminées est sélectionnée pour la classification du comportement de propagation.

3. Procédé selon la revendication 1 ou 2, **caractérisé en ce que** l'évaluation des canaux est de nouveau réalisée depuis le début en cas de changement de la classification.

4. Procédé selon l'une des revendications précédentes,
**caractérisé en ce qu'**un modèle est sélectionné pour l'évaluation des canaux sur la base de la classification du comportement de propagation.

5. Procédé selon l'une des revendications précédentes,
**caractérisé en ce que** des paramètres de l'évaluation des canaux sont ajustés sur la base de la classification du comportement de propagation et/ou des informations du système de détection de l'environnement.

6. Procédé selon la revendication 5, **caractérisé en ce que** les paramètres correspondent à un facteur d'oubli, à une puissance de réfléchissement, à une atténuation, à un assombrissement et/ou à la vitesse du véhicule.

7. Procédé selon l'une des revendications précédentes,
**caractérisé en ce que** le système de détection de l'environnement reconnaît au moins l'environnement qui se trouve dans la direction du mouvement du véhicule à moteur.

8. Procédé selon l'une des revendications précédentes,
**caractérisé en ce que** ledit procédé est employé pour une communication sans fil conçue sous la forme d'une radio à courte portée.

9. Procédé selon l'une des revendications précédentes,
**caractérisé en ce que** le procédé destiné à l'évaluation des canaux est réalisé dans une unité de calcul d'une unité de fonction de communication du véhicule à moteur.

10. Unité de fonction d'un véhicule à moteur avec un mécanisme de transmission et de réception destiné à la communication sans fil, avec une connexion au réseau de communication du véhicule en vue de la réception d'informations depuis un système de détection de l'environnement du véhicule à moteur et avec une unité de calcul, **caractérisée en ce que** l'unité de calcul est configurée en vue de la réalisation du procédé selon l'une des revendications 1 à 9.

11. Produit de programme informatique destiné à la réalisation d'une évaluation des canaux dans le cas d'une communication sans fil entre un véhicule à moteur et un autre abonné de communication, lequel produit de programme informatique comprend des moyens de code de programme qui sont destinés à l'exécution d'un programme informatique, à la suite de sa mise en oeuvre dans une unité de calcul,
**caractérisé en ce que** les moyens de programme sont prévus en vue de réaliser le procédé selon l'une des revendications 1 à 9, après la mise en oeuvre dans une unité de calcul.
